Europäisches Patentamt

European Patent Office

Office européen des brevets

(11) Numéro de publication: **0 178 195**
**A1**

## (12) DEMANDE DE BREVET EUROPEEN

(21) Numéro de dépôt: **85401629.2**

(22) Date de dépôt: **09.08.85**

(51) Int. Cl.⁴: **G 02 B 6/06**

(30) Priorité: **14.08.84 FR 8412778**

(43) Date de publication de la demande: **16.04.86**
**Bulletin 86/16**

(84) Etats contractants désignés: **DE GB SE**

(71) Demandeur: **THOMSON-CSF, 173, Boulevard Haussmann, F-75379 Paris Cedex 08 (FR)**

(72) Inventeur: **Reymond, Jean-Claude, THOMSON-CSF SCPI 173, bld Haussmann, F-75379 Paris Cedex 08 (FR)**

(74) Mandataire: **Benoit, Monique et al, THOMSON-CSF SCPI 19, avenue de Messine, F-75008 Paris (FR)**

(54) **Dispositif de transport d'image par câble optique.**

(57) Le dispositif permet d'éliminer l'aspect granulaire ou de trame d'une image transportée par un faisceau ordonné de fibres optiques.

Le dispositif est constitué d'un faisceau de fibres optiques (1) d'une optique d'entrée (2) placée devant la face d'entrée (FE) du faisceau de fibres, et une optique de sortie (3) placée après la face de sortie (FS) du faisceau de fibres.

Le principe du système consiste à animer l'image à transporter d'un mouvement par rapport à la face d'entrée, et d'animer l'image transportée du même mouvement par rapport à l'optique de sortie. Les mouvements à l'entrée et à la sortie du faisceau de fibres sont strictement identiques et synchrones. Leur amplitude est supérieure au diamètre des fibres optiques et la période inférieure à la persistance rétinienne humaine.

# DISPOSITIF DE TRANSPORT D'IMAGE PAR CABLE OPTIQUE

Le domaine de l'invention est celui du transport d'image par câble optique constitué d'un faisceau ordonné de fibres optiques. Cette invention est applicable à tout transport d'image lumineuse, notamment si l'on élabore l'image à l'aide d'un tube cathodique. Une utilisation pour la navigation aérienne est prévue dans le but de visualiser une image collimatée au pilote.

Dans les systèmes de transport d'image lumineuse par fibres optiques, l'information contenue dans chaque surface élémentaire de l'image transportée par une fibre élémentaire du faisceau, est restituée à la sortie de la fibre. L'image est formée par l'assemblage des surfaces des extrémités de sortie des fibres. De la sorte, l'image observée est constituée de petites surfaces juxtaposées.

Dans le cas d'un faisceau ordonné, les fibres optiques sont disposées de façon à ce que les extrémités correspondant à une même fibre soient situées en des positions homologues en X et en Y sur les deux faces terminales du faisceau. Le rangement homologue des fibres à chaque extrémité permet ainsi le transport d'image. Un faisceau ordonné de fibres optiques comporte en général plusieurs dizaines de milliers de fibres de petit diamètre, 10 à 20 microns. Il en résulte que l'image observée peut présenter un aspect granulaire, comme vu à travers une grille ou une trame. De plus, la résolution de l'image obtenue est limitée géométriquement par la dimension élémentaire des fibres.

Quelques systèmes sont connus, pour éliminer cet effet de trame de l'image transportée. En particulier, la demande de brevet français 2 504 758 décrit un système qui comporte en amont d'un objectif d'entrée, un premier prisme de déviation pour disperser le rayonnement en fonction de la longueur d'onde sur la surface d'entrée du câble, et en aval d'un objectif de sortie, un deuxième prisme pour fusionner de manière inverse les rayonnements dispersés et reformer l'image sans le défaut de trame à la face de sortie.

Le principal inconvénient de ce dispositif est qu'il utilise la dispersion chromatique de l'image. Il n'est donc pas applicable à des images monochromes, ou à des images élaborées à l'aide de très peu de longueurs d'ondes différentes. Un but de l'invention est d'apporter une autre solution au problème et de remédier à ses limitations.

L'objet de l'invention est un dispositif de transport d'une image lumineuse par un câble optique formé par un faisceau ordonné de fibres optiques et terminé par deux faces d'extrémités, une face d'entrée et une face de sortie, une optique d'entrée formant l'image à transporter sur la face d'entrée, une optique de sortie reprenant l'image transportée sur la face de sortie et permettant son observation. Le dispositif se caractérise en ce qu'il comporte des premiers moyens de déplacement pour faire subir à l'image transportée sur la face de sortie un mouvement périodique par rapport à l'optique de sortie afin d'éliminer l'effet de trame, des seconds moyens de déplacement pour faire subir à l'image formée par l'optique d'entrée le même mouvement relativement à la face d'entrée afin de préserver la stabilité de l'image observée en sortie, et un dispositif de commande en synchronisme desdits mouvements qui ont une amplitude supérieure au diamètre des fibres et une période inférieure à la persistance rétinienne humaine.

Les particularités de l'invention apparaîtront dans la description qui suit, donnée à titre d'exemple, et à l'aide des figures annexées qui représentent :

- Figure 1, un schéma relatif à un dispositif de transport d'image par câble optique conforme à la présente invention ;

- Figures 2a, 2b, et 2c, des schémas concernant le fonctionnement du dispositif ;

- Figure 3, un schéma d'un premier mode de réalisation du dispositif ;

Figure 4, un schéma d'un deuxième mode de réalisation du dispositif ;

- Figures 5a, 5b des schémas relatifs à un troisième mode de réalisation du dispositif ;

- Figure 6, un schéma d'un mode préférentiel de réalisation du dispositif ;

- Figures 7a, 7b, et 7c, des dispositifs optiques de rotation d'images utilisables dans le mode de réalisation de la figure 6.

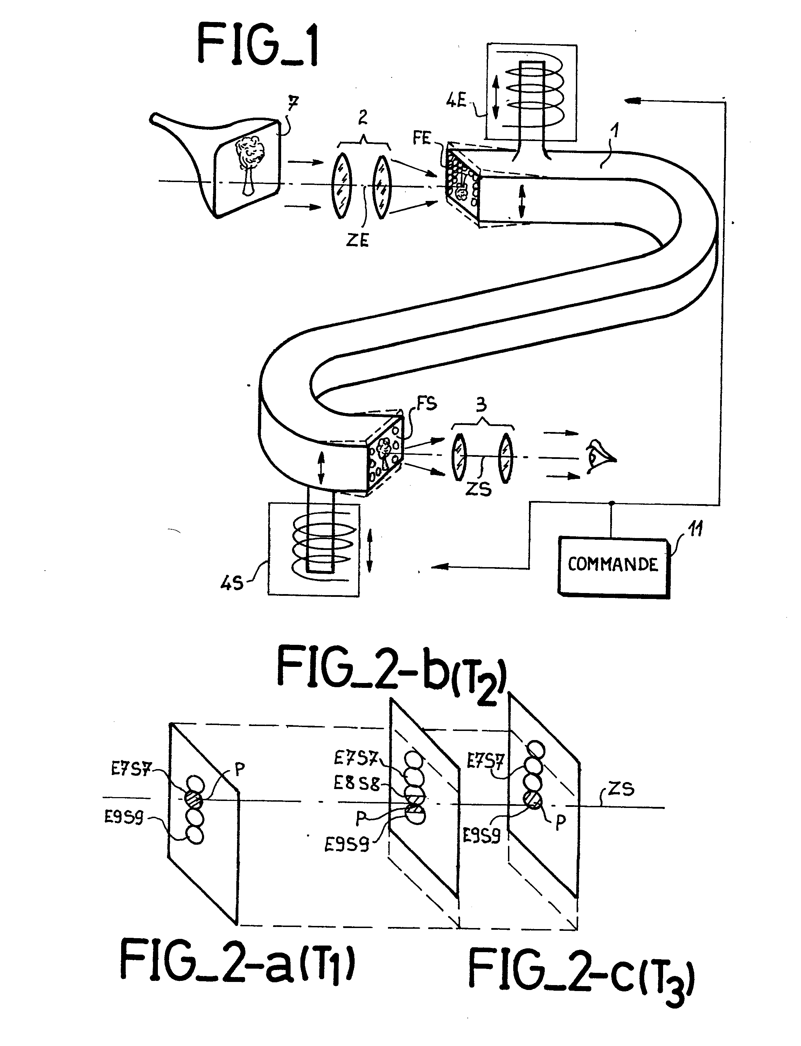

En se reportant à la figure 1, le système de transport d'image comporte le faisceau ordonné 1 de fibres optiques constituant le câble de transmission, un objectif optique entrée 2 et un objectif optique de sortie 3. L'objectif optique d'entrée 2 effectue la mise au point de la scène observée à transporter sur la face d'entrée FE du faisceau. Le rayonnement incident peut être formé de rayons parallèles et focalisés par l'optique 2 sur la face d'entrée FE située dans le plan image correspondant. L'image lumineuse est reproduite à la sortie sur la face de sortie FS puisque le câble 1 est un faisceau ordonné. La face de sortie FS est située dans le plan focal de l'objectif de sortie 3 qui assure, de manière inverse, le passage en rayons parallèles pour l'observation visuelle collimatée du rayonnement diffusé par cette face de sortie FS. Les axes optiques ZE et ZS des objectifs 2 et 3 sont dans cette représentation, perpendiculaires aux faces planes d'extrémités du câble optique 1.

Selon l'invention, pour éliminer l'aspect granulaire ou tramé de l'image dû à la juxtaposition des fibres, on fait subir à l'image formée sur la face de sortie FS un mouvement relatif par rapport à l'objectif de sortie 3. Des premiers moyens de déplacement 4S sont utilisés pour produire ce mouvement. Sur la figure 1 on a symbolisé un vibreur 4S qui impose à l'extrémité de sortie du faisceau un mouvement vibratoire, l'objectif de sortie 3 restant fixe.

Pour obtenir l'effet voulu, le mouvement est de préférence une translation périodique de direction parallèle, ou sensiblement, à la face de sortie FS, avec une amplitude supérieure au diamètre des fibres. La période de ce mouvement doit être inférieure au temps de la persistance rétinienne de l'oeil humain, qui est environ de 0,1 seconde. Par exemple, l'amplitude du mouvement sera de 50 à 100 microns pour un diamètre de fibres de 10 microns, la fréquence du mouvement étant de 80 Hz.

Pour que le mouvement appliqué à l'image transportée n'affecte pas la stabilité et la netteté de l'image, à l'entrée du câble on fait subir le même mouvement à l'image formée par l'optique d'entrée 2, par rapport à la face d'entrée FE. Les deux mouvements doivent être rigoureusement identiques et être effectués avec un synchronisnme précis. A cet effet, des seconds moyens de déplacement 4E, similaires aux premiers, sont utilisés pour produire ce mouvement, par exemple un vibreur faisant vibrer l'extrémité de sortie du faisceau. Les moyens de commande 11 commandent simultanément et en synchronisme les moyens de déplacement 4S et 4E pour que les mouvements du câble à l'entrée et à la sortie soient identiques en amplitude et en phase.

L'image à transporter peut être celle de l'écran d'un tube cathodique 7. Le dispositif optique de sortie 3 peut consister en un oculaire où une loupe pour faciliter l'observation de l'image.

Le résultat de ces mouvements est mis en évidence à l'aide des figures 2a, 2b et 2c, qui représentent la position des faces d'entrée et de sortie à des instants consécutifs T1,T2 et T3 durant un des nombreux déplacements linéaires constituant le mouvement de l'image. Sur ces figures, on considère le câble de longueur nulle, et chaque entrée de fibre, telle E7, est représentée sur le même plan que la sortie S7 de la même fibre. La fibre E7-S7 transporte à l'instant T1 considéré la lumière d'un point P de l'image situé par exemple sur l'axe ZS. La lumière du point P est représentée par des hachures sur les trois figures 2a, 2b et 2c. Les mouvements à l'entrée et à la sortie du câble étant rigoureusement identiques, l'entrée et la sortie de chaque fibre ont été représentées en coïncidence sur ces trois figures.

A l'instant T3 (figure 2c), ce n'est plus la fibre E7-S7 qui transporte la lumière du point P, mais une autre fibre avoisinante de celle-ci, par exemple, E9-S9.

Entre temps, par exemple à l'instant T2 (figure 2b), la lumière du point P a été transportée par une ou plusieurs fibres différentes en l'occurence E8-S8 et E9-S9. Sur les figures 2b et 2c, la position d'origine de l'image à l'instant T1 est reproduite en traits interrompus pour mettre en valeur l'amplitude du déplacement.

Pendant le temps d'intégration de l'oeil (persistance rétinienne) le faisceau de fibres 1 aura occupé, par rapport aux axes optiques d'entrée ZE et de sortie ZS, un grand nombre de positions différentes pour lesquelles l'image est fixe. Mais l'effet de trame dû à la structure du faisceau de fibres est supprimé.

La synchronisation du mouvement à l'entrée avec celui à la sortie fait que l'image transmise à l'optique de sortie 3 est la même que celle transmise par l'optique d'entrée 2. De plus cette image reste nette, car lorsque à l'instant T1 l'entrée E7 d'une fibre reçoit l'image du point P, la sortie S7 de la même fibre restitue le point P. Lorsque à l'instant T3 l'entrée et la sortie sont déplacées simultanément et de façon identique, la lumière du point P est reçue par une autre entrée E9. Comme la sortie S9 de cette dernière fibre subit le même déplacement, le point P se trouve restitué au même endroit qu'à l'entrée E9, et qu'à l'instant T1. Tout en étant transmise par un faisceau ordonné de fibres, l'image est restituée avec une netteté équivalente à celle d'une image perçue sans l'intermédiaire d'un tel faisceau.

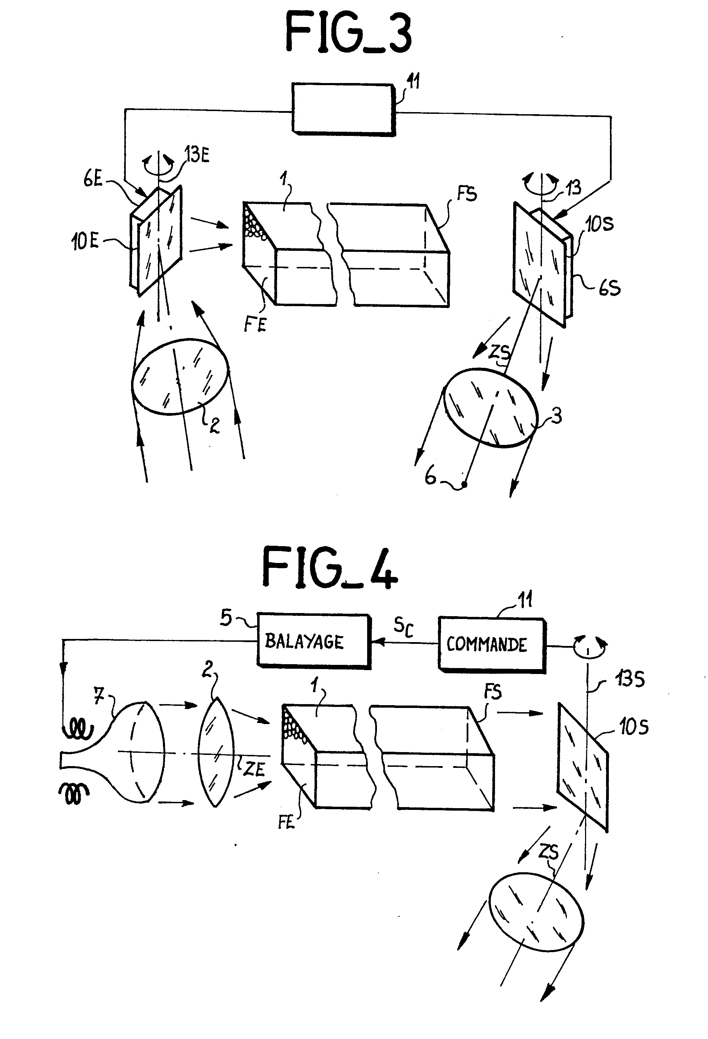

Pour pouvoir provoquer le mouvement indispensable à l'entrée et à la sortie du faisceau, le mode de réalisation représenté sur la figure 3 propose, non pas d'agiter des faisceaux de fibres 1 d'un mouvement vibratoire, mais d'utiliser un déviateur optique tel un miroir plan à chaque extrémité pour provoquer les déplacements relatifs. Les faces d'entrée FE et de sortie FS ne sont plus alors orientées perpendiculairement aux axes ZE et ZS, mais de façon à ce qu'un premier miroir plan d'entrée 10E réfléchisse sur la face d'entrée FE l'image produite par l'objectif d'entrée 2, et pour qu'un deuxième miroir plan de sortie 10S réfléchisse l'image produite par la face de sortie FS vers l'objectif de sortie 3. Dans la réalisation décrite ici, on a opté pour des axes optiques ZE et ZS parallèles respectivement aux faces d'entrée FE et de sortie FS. Les deux

miroirs 10E et 10S sont animés d'un mouvement oscillant par rotation autour des axes 13E, 13S dans les plans des miroirs, de faible amplitude, et de fréquence correspondant à une période inférieure au temps de la persistance rétinienne. Les deux miroirs peuvent être animés du mouvement déterminé à l'aide respectivement de deux quartz 6E et 6S pilotés en synchronisme par le circuit de commande 11. Cette réalisation a l'avantage de ne pas exiger de mouvement alternatif du faisceau de fibres 1 plus difficile à mettre en oeuvre que de petits mouvements de rotation d'un petit miroir.

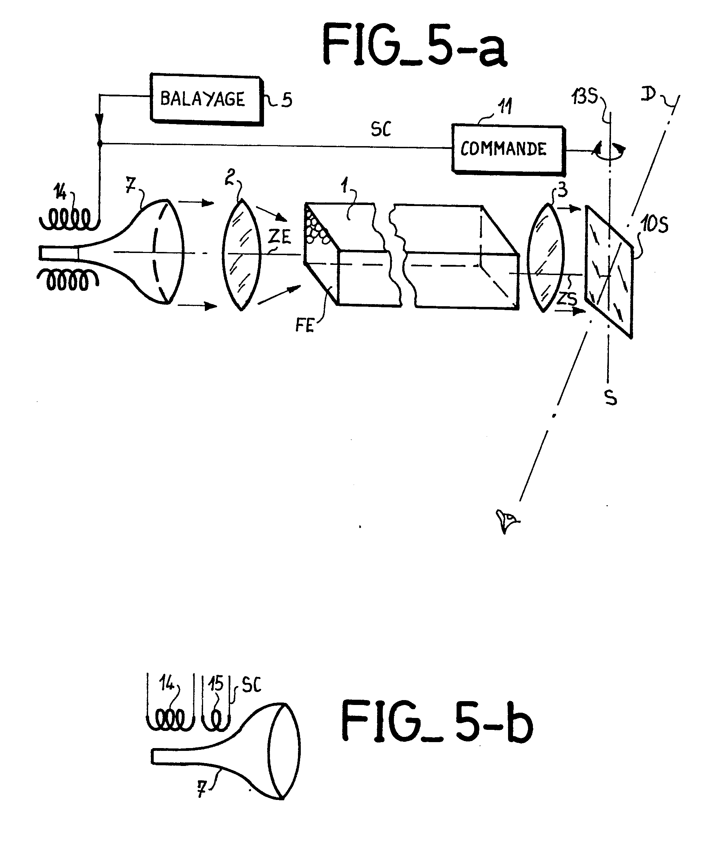

Une deuxième variante possible de réalisation du dispositif consiste, comme le montre la figure 4, en une modification au niveau de l'entrée du câble. Le miroir d'entrée 10E de la figure 3 a été supprimé. Le mouvement relatif entre l'image à transmettre et la face d'entrée FE du faisceau de fibres 1 est assuré par le tube cathodique 7 qui fournit l'image. Le dispositif de commande 11 du miroir côté sortie 10S commande également le tube cathodique. On a représenté en 5 un générateur de balayage synchronisé qui cadence le spot du tube pour produire un balayage ligne par ligne. Ce générateur de balayage 5 reçoit un signal de commande SC du dispositif de commande 11 pour décaler, par exemple verticalement, les lignes horizontales. Le mouvement relatif de la scène à transmettre par rapport à l'entrée du faisceau de fibres 1 est ainsi à assurer électroniquement, sans aucun moyen mécanique.

En référence à la figure 5a, le signal de commande SC, issu du dispositif de commande 11, est appliqué directement à l'une des deux bobines de déflexion 14 du tube 7 pour assurer la même fonction. Le balayage est toujours assuré par le circuit de balayage 5 mais indépendamment du signal SC. Selon la variante de la figure 5b, on applique le signal SC à un bobinage supplémentaire 15 (ou plusieurs spires) dont la petite déflexion vient s'ajouter aux déflexions principales dues aux bobines de balayage du tube.

Une application pour la navigation aérienne consiste à présenter à un oeil du pilote l'image transportée par le câble. Dans ce cas l'extrémité de sortie du câble est fixée sur le casque du pilote, le miroir de sortie 10S est semi-réfléchissant et permet au pilote de voir simultanément dans la direction D le paysage extérieur non affecté par la vibration du miroir, et par réflexion l'image nette collimatée qui est transportée par le faisceau optique. L'image, pouvant représenter les indications de vol, est produite par un tube cathodique 7 qui peut soit être logé dans un emplacement libre de la cabine de pilotage, soit être une caméra de petite taille dont le poids permette sa fixation sur le casque.

Le système peut également être monté en collimateur tête-haute, le miroir de sortie 10S étant également semi-réfléchissant.

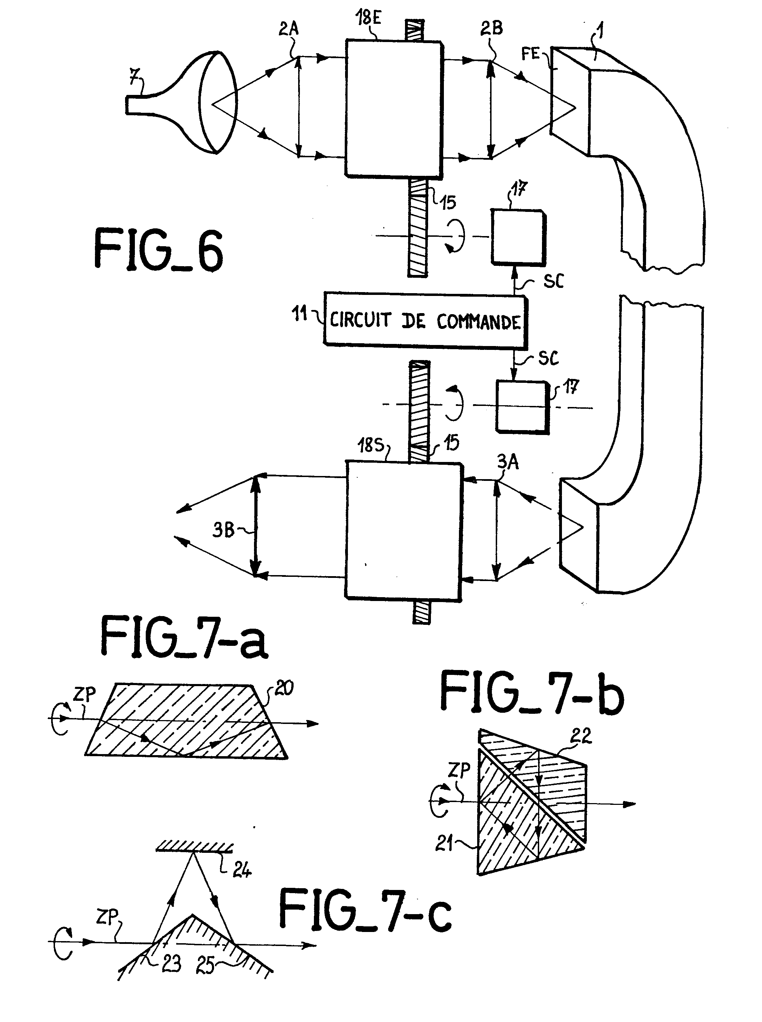

Dans le cas de la réalisation préférentielle selon la figure 6, le mouvement imposé à l'entrée et à la sortie est un mouvement de rotation uniforme. Chaque point de l'image subit donc un déplacement circulaire continu. Si l'image à transporter est fournie par un tube cathodique 7, on dispose d'une première optique d'entrée 2A qui transforme l'image de l'écran du tube en rayons parallèles. Avant la face d'entrée FE du faisceau de fibres 1, une optique de rotation 18E reçoit l'image et une deuxième optique d'entrée 2B reprend l'image tournante collimatée pour la focaliser sur la face d'entrée.

Des moyens de mise en rotation 17, commandés par le circuit de commande 11, entraînent par l'intermédiaire de roues dentées 15 l'optique de rotation 18E. Cet élément optique introduit dans la chaîne entre les deux optiques d'entrée 2A et 2B, peut être réalisé de diverses manières.

Par exemple, la figure 7a montre un prisme Wollaston 20 tournant autour de l'axe ZE passant au centre de l'image.

La figure 7b montre un montage équivalent avec des prismes dit de Péchan 21,22.

La figure 7c montre un autre montage équivalent utilisant trois miroirs 23, 24 et 25.

Les moyens de commande 11 pilotent des moyens de mise en rotation 17 qui entraînent en rotation une optique de rotation 18S à la sortie du faisceau de fibres pour rendre l'image immobile. Une première optique de sortie 3A est alors utilisée pour restituer l'image transportée sous forme de rayons parallèles et une deuxième optique 3B permet l'observation de l'image restabilisée. Les optiques 2A et 3B ne sont utilisées que dans les cas où les images initiale et finale doivent être respectivement mises sous forme de rayons parallèles et focalisés.

Le mouvement du miroir de sortie peut être de grande amplitude, pour permettre de visualiser une image dont une dimension est beaucoup plus grande que celle du champ réel couvert par l'optique de sortie. L'image formée sur l'extrémité d'entrée du faisceau n'est à chaque instant qu'une partie de l'image totale à visualiser. L'observateur voit donc successivement différentes parties de l'image et croit percevoir de façon permanente, à cause de la persistance rétinienne, une image qui occupe la totalité du champ.

Les faces d'extrémités sont de préférence planes. Elles peuvent être légèrement concaves pour compenser la courbure des optiques.

## REVENDICATIONS

1. Dispositif de transport d'une image lumineuse par un câble optique formé par un faisceau ordonné (1) de fibres optiques et terminé par deux faces d'extrémité, une face d'entrée (FE) et une face de sortie (FS), une optique d'entrée (2) formant l'image à transporter sur la face d'entrée, une optique de sortie (3) pour reprendre l'image transportée sur la face de sortie et permettre son observation, le dispositif étant caractérisé par le fait qu'il comporte des premiers moyens de déplacement (4S,10S,18S) pour faire subir à l'image transportée sur la face de sortie un mouvement périodique par rapport à l'optique de sortie afin d'éliminer l'effet de trame, des seconds moyens de déplacement (4E,10,18E) pour subir à l'image formée par l'optique d'entrée le même mouvement relativement à la face d'entrée pour préserver la stabilité de l'image observée en sortie, et un circuit de commande (11) en synchronisme desdits mouvements qui ont une amplitude supérieure au diamètre des fibres et une période inférieure à la persistance rétinienne humaine.

2. Dispositif selon la revendication 1, caractérisé en ce que les premiers moyens de déplacement sont constitués d'un miroir plan (10S) placé à proximité de la face de sortie (FS) de façon à réfléchir l'image transportée vers l'optique de sortie (3), animé d'un mouvement oscillant autour d'un axe (13S) de son plan, et étant commandé par le circuit de commande (11) pour reproduire ledit mouvement, et en ce que les deuxièmes moyens de déplacement sont constitués par un miroir plan (10E) placé à proximité de la face d'entrée (FE) de façon à réfléchir l'image vers la face d'entrée, le miroir étant animé du même mouvement oscillant autour d'un axe (13E) de son plan de manière à reproduire ledit mouvement.

3. Dispositif selon la revendication 1, caractérisé en ce que les premiers moyens de déplacement sont constitués d'un miroir plan (10S) placé à proximité de la face de sortie (FS) de façon à réfléchir l'image transportée vers l'optique de sortie (3), animé d'un mouvement oscillant autour d'un axe (13S) de son plan, et étant commandé par le circuit de commande (11) pour reproduire ledit mouvement, et en ce que les deuxièmes moyens de déplacement sont constitués par un tube cathodique (7) à balayage ligne par ligne, le circuit de commande délivrant un signal de commande (SC) pour décaler le balayage.

4. Dispositif selon la revendication 3, caractérisé en ce que le signal de commande (SC) est appliqué à un circuit de balayage (5) dont la sortie commande le tube cathodique (7) afin de produire à l'entrée du faisceau (1) le mouvement déterminé au moyen du balayage ligne par ligne.

5. Dispositif selon la revendication 3, caractérisé en ce que le tube cathodique (7) étant équipé de bobines de déflexion (14) le signal de commande (SC) est appliqué directement à une de ces bobines pour produire le mouvement déterminé à l'aide du balayage ligne par ligne.

6. Dispositif selon la revendication 5, caractérisé en ce que l'une des bobines de déflexion (14) du tube cathodique (7) possède un bobinage supplémentaire (15) recevant le signal de commande (SC).

7. Dispositif selon la revendication 1, caractérisé en ce que les premiers moyens de déplacement sont constitués d'une optique de rotation de sortie (18S), placée après l'optique de sortie (3A), et en ce que les deuxièmes moyens de déplacement sont constitués d'une optique de rotation (18E) placée avant l'optique d'entrée (2A), ces deux optiques de rotation étant animées d'un même mouvement de rotation prédéterminé par des moyens de mise en rotation (17) commandés par le circuit de commande (11).

8. Dispositif selon l'une quelconque des revendications précédentes, caractérisé en ce que les faces d'extrémité (FE,FS) du faisceau (1) sont concaves.

9. Dispositif selon la revendication 3, utilisé en collimateur de vol monté en visualisation tête-haute, dans lequel le miroir de sortie (10S) est semi-réfléchissant pour visualiser simultanément, l'image transportée et collimatée, et le paysage extérieur.

10. Dispositif selon la revendication 3, utilisé en collimateur de vol et dont au moins l'extrémité de sortie du câble (1), l'optique de sortie (3) et le miroir de sortie (10S) sont montés sur le casque du pilote, ledit miroir de sortie étant semi-réfléchissant pour visualiser simultanément, l'image transportée et collimatée, et le paysage extérieur.

0178195

# FIG_1

COMMANDE

# FIG_2-b(T₂)

# FIG_2-a(T₁)    FIG_2-c(T₃)

**FIG_3**

**FIG_4**

# FIG_5-a

BALAYAGE ~5

COMMANDE 11

SC

13S

D

14

7

2

ZE

1

FE

3

ZS

10S

S

# FIG_5-b

14 15 SC

7

# FIG_6

18E

2A

2B

FE

1

7

15

17

SC

11 CIRCUIT DE COMMANDE

SC

17

15

18S

3A

3B

# FIG_7-a

ZP

20

# FIG_7-b

ZP

22

21

# FIG_7-c

24

ZP

23  25

**0178195**

Numéro de la demande

EP  85 40 1629

Office européen
des brevets

# RAPPORT DE RECHERCHE EUROPEENNE

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| Y | DE-A-1 572 782  (OPTOMECHANISMS INC.) <br> * Revendications 1,2,7; figures * | 1,2 | G 02 B    6/06 |
| Y | PATENTS ABSTRACTS OF JAPAN, vol. 6, no. 51 (P-108) [929], 6 avril 1982, page 25 p 108; & JP - A - 56 164 309 (MACHIDA SEISAKUSHO K.K.) 17-12-1981 <br> * Résumé * | 1,2 | |
| A | GB-A-2 081 923  (AOC) <br> * Revendications; figures * | 1 | |
| A | US-A-4 154 502  (W.P. SIEGMUND) <br> * Résumé * | 1 | |
| A | DE-A-2 241 804  (AOC) <br> * Revendications; figures * | 1,7 | DOMAINES TECHNIQUES RECHERCHES (Int. Cl.4) <br><br> G 02 B |
| A | US-A-4 141 624  (W.P. SIEGMUND) <br> * Revendications * | 1 | |
| A | DE-A-2 242 834  (AOC) <br> * Revendications * | 1 | |
| A | DE-B-1 163 985  (TELEFUNKEN) <br> * Revendications * | 3-6 | |
| | ---          -/- | | |

Le présent rapport de recherche a été établi pour toutes les revendications

| Lieu de la recherche <br> LA HAYE | Date d'achèvement de la recherche <br> 22-11-1985 | Examinateur <br> PFAHLER |
|---|---|---|

**RAPPORT DE RECHERCHE EUROPEENNE**

Office européen
des brevets

EP  85 40 1629

Page  2

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | US-A-3 535 446  (E.H. HILBORN) <br> * Revendications * | 3,4 | |
| | --- | | |
| A,D | EP-A-0 064 899  (THOMSON) <br> * Résumé * | 1 | |
| | ----- | | |

| | DOMAINES TECHNIQUES RECHERCHES (Int. Cl.4) |
|---|---|

Le présent rapport de recherche a été établi pour toutes les revendications

| Lieu de la recherche | Date d'achèvement de la recherche | Examinateur |
|---|---|---|
| LA HAYE | 22-11-1985 | PFAHLER E.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant